Europäisches Patentamt

European Patent Office

Office européen des brevets

(19)

(11) **EP 0 866 219 B1**

(12) **EUROPEAN PATENT SPECIFICATION**

(45) Date of publication and mention
of the grant of the patent:
**25.02.2004 Bulletin 2004/09**

(51) Int Cl.⁷: **F02D 41/12**

(21) Application number: **98104626.1**

(22) Date of filing: **13.03.1998**

(54) **Fuel cut control apparatus for internal combustion engine**

Sperrsteuerungssystem für die Kraftstoffeinspritzung in einer Brennkraftmaschine

Appareil de commande de coupure d'injection de carburant pour un moteur à combustion interne

(84) Designated Contracting States:
**DE FR IT**

(30) Priority: **17.03.1997 JP 6316397**
**17.03.1997 JP 6316797**

(43) Date of publication of application:
**23.09.1998 Bulletin 1998/39**

(60) Divisional application:
**03014624.5 / 1 359 305**

(73) Proprietor: **TOYOTA JIDOSHA KABUSHIKI KAISHA**
**Aichi-ken 471-8571 (JP)**

(72) Inventor: **Kawai, Takashi**
**Toyota-shi, Aichi (JP)**

(74) Representative:
**Winter, Brandl, Fürniss, Hübner, Röss, Kaiser, Polte Partnerschaft**
**Patent- und Rechtsanwaltskanzlei**
**Alois-Steinecker-Strasse 22**
**85354 Freising (DE)**

(56) References cited:
**DE-A- 19 630 944       JP-A- 57 002 442**
**US-A- 4 084 558        US-A- 4 674 458**
**US-A- 5 570 575**

• **PATENT ABSTRACTS OF JAPAN vol. 013, no. 398 (M-866), 5 September 1989 (1989-09-05) & JP 01 142234 A (TOYOTA MOTOR CORP), 5 June 1989 (1989-06-05)**
• **PATENT ABSTRACTS OF JAPAN vol. 010, no. 189 (M-494), 3 July 1986 (1986-07-03) & JP 61 034327 A (TOYOTA MOTOR CORP), 18 February 1986 (1986-02-18)**

## Description

### BACKGROUND OF THE INVENTION

#### 1. Field of the Invention

The present invention relates to a fuel cut control apparatus, for an internal combustion engine, that controls fuel cutoff (hereinafter referred to as fuel cut or F/C) to the internal combustion engine during deceleration in order to improve fuel economy, etc.

#### 2. Description of the Related Art

usually, in an electronically controlled fuel injection control apparatus for an internal combustion engine, when the throttle valve is in its fully closed position, and yet the engine rpm is higher than a preset value, it is determined that the vehicle is in a decelerating condition that does not need fuel delivery, and fuel cut control is performed to temporarily stop fuel injection in order to improve fuel economy.

Japanese Unexamined Patent Publication No. 8-144814, for example, discloses one such fuel cut control apparatus. This prior art proposes that, when the temperature of the catalyst installed in the exhaust system of an internal combustion engine is high, fuel cut during deceleration be prohibited to prevent the catalyst from being exposed to a high-temperature, lean atmosphere in order to avoid catalyst deterioration.

US-A-5 570 575, which is considered closest prior art, discloses the features of the preamble of claim 1 of the present invention.

It is also known from JP 01 142234 A to detect catalyst temperature, vehicle and engine speed and idle running conditions and to implement fuel cut based on these parameters. According to the teaching of this document, the intake air amount is not detected.

Similarly, DE 196 30 944 discloses to detect catalyst temperature from engine speed and fuel injection amount and to stop the prohibition of fuel injection based on this detection.

The above prior art, however, does not give any regard to the combustion limit for the intake air amount when the vehicle is in a driving condition under which fuel cut is to be performed. Therefore, when fuel cut is prohibited, fuel is injected with the intake air amount per stroke dropping below the combustion limit, resulting in the problem that misfire occurs and catalyst temperature rises excessively. That is, despite the fact that fuel cut is prohibited to prevent catalyst deterioration, it ends up causing an ill effect on the catalyst.

Furthermore, it is known from JP 57002442 A to control the amount of intake air in accordance with engine revolution speed by measuring an intake air flow rate per engine revolution and and adjusting an air control valve position in order to prevent misfire and overheating of the catalyst.

Furthermore, in the apparatus of the above prior art, under similar driving conditions, there exist cases where fuel cut is effected and fuel injection is stopped, and cases where fuel cut is prohibited and fuel injection is allowed to continue, depending on the temperature of the catalyst. This causes a difference in vehicle deceleration feeling; that is, the deceleration feeling is impaired when fuel cut is prohibited. The prior art, therefore, has had a problem in that the impairment of the deceleration feeling gives the driver an unnatural feeling.

### SUMMARY OF THE INVENTION

In view of the above situation, it is an object of the present invention to provide a fuel cut control apparatus, for an internal combustion engine, capable of avoiding the occurrence of misfire resulting from a drop in intake air amount when a deceleration fuel cut is prohibited in order to prevent catalyst deterioration in a high-temperature, lean atmosphere.

To accomplish the object, there is provided a fuel cut control apparatus according to claim 1.

In the above-constructed fuel cut control apparatus for the internal combustion engine according to the first aspect of the present invention, when effecting fuel injection by prohibiting deceleration fuel cut to prevent catalyst deterioration, since the minimum intake air amount necessary for combustion is secured, the occurrence of misfire can be avoided without fail.

According to a favourable aspect of the present invention there is provided a fuel cut control apparatus according to claim 2.

According to a favourable aspect of the present invention, preferably the judging means in the fuel cut control apparatus for the internal combustion engine according to the second aspect of the present invention judges that the vehicle is in said driving condition when the vehicle speed is below a predetermined value.

According to another favourable aspect of the present invention, preferably the judging means in the fuel cut control apparatus for the internal combustion engine according to the second aspect of the present invention judges that the vehicle is in said driving condition when a gear lower than a prescribed gear is selected in a transmission connected to the internal combustion engine.

Furthermore, according to another favourable aspect of the present invention there is provided a fuel cut control apparatus according to claim 5.

The driving condition that impairs the deceleration feeling and gives the driver an unnatural feeling is the driving condition under which the decelerating force of the internal combustion engine makes an appreciable contribution to vehicle deceleration. In the above-constructed fuel cut control apparatus for the internal combustion engine according to the second aspect of the present invention, under such a driving condition the fuel cut prohibition to be effected for the prevention of catalyst deterioration is aborted and fuel cut is effected; as a result, the decelerating force of the internal combustion engine increases and the impairment of the vehicle deceleration feeling is prevented.

when the vehicle speed is slow, aerodynamic drag due to wind is small, and therefore, it can be said that the vehicle is in the driving condition under which the decelerating force of the internal combustion engine (engine braking) makes an appreciable contribution to vehicle deceleration. In the fuel cut control apparatus according to the third aspect of the present invention, when the vehicle speed is below a predetermined value the fuel cut prohibition to be effected for the prevention of catalyst deterioration is aborted to prevent the impairment of the deceleration feeling.

Furthermore, when a low gear is selected in the transmission connected to the internal combustion engine, it can also be said that the vehicle is in the driving condition under which the decelerating force of the internal combustion engine makes an appreciable contribution to vehicle deceleration. In the fuel cut control apparatus according to the fourth aspect of the present invention, when a gear lower than a prescribed gear is selected in the transmission connected to the internal combustion engine the fuel cut prohibition to be effected for the prevention of catalyst deterioration is aborted to prevent the impairment of the deceleration feeling.

Moreover, when the transmission connected to the internal combustion engine is in the neutral state, it can be said that the driving condition is such that the driver is expecting the engine speed to drop soon. In the fuel cut control apparatus according to the fifth aspect of the present invention, when the transmission connected to the internal combustion engine is in the neutral state the fuel cut prohibition to be effected for the prevention of catalyst deterioration is aborted to prevent the driver from being subjected to an unnatural feeling.

BRIEF DESCRIPTION OF THE DRAWINGS

Further features and advantages of the present invention will be apparent from the following description with reference to the accompanying drawings, in which:

Figure 1 is a schematic diagram showing the general construction of an electronically controlled internal combustion engine equipped with a fuel cut control apparatus according to one embodiment of the present invention;
Figure 2 is a block diagram showing the hardware configuration of an engine electronic control unit (engine ECU);
Figure 3 is a flowchart illustrating a processing sequence for a catalyst bed temperature estimation routine executed by CPU;
Figure 4 is a flowchart illustrating a processing sequence for a deceleration fuel cut execution control routine (first embodiment) executed by CPU;
Figure 5 is a diagram showing a map defining DOPMINmap, the ISCV opening necessary to provide a lower limit intake air amount for the prevention of misfire, as a function of engine rpm NE;
Figure 6 is a flowchart illustrating a processing sequence for a deceleration fuel cut execution control routine (second embodiment) executed by CPU;
Figure 7 is a flowchart illustrating a processing sequence for a deceleration fuel cut execution control routine (third embodiment) executed by CPU; and
Figure 8 is a flowchart illustrating a processing sequence for a deceleration fuel cut execution control routine (fourth embodiment) executed by CPU.

DESCRIPTION OF THE PREFERRED EMBODIMENTS

The preferred embodiments of the present invention will be described below with reference to the accompanying drawings.

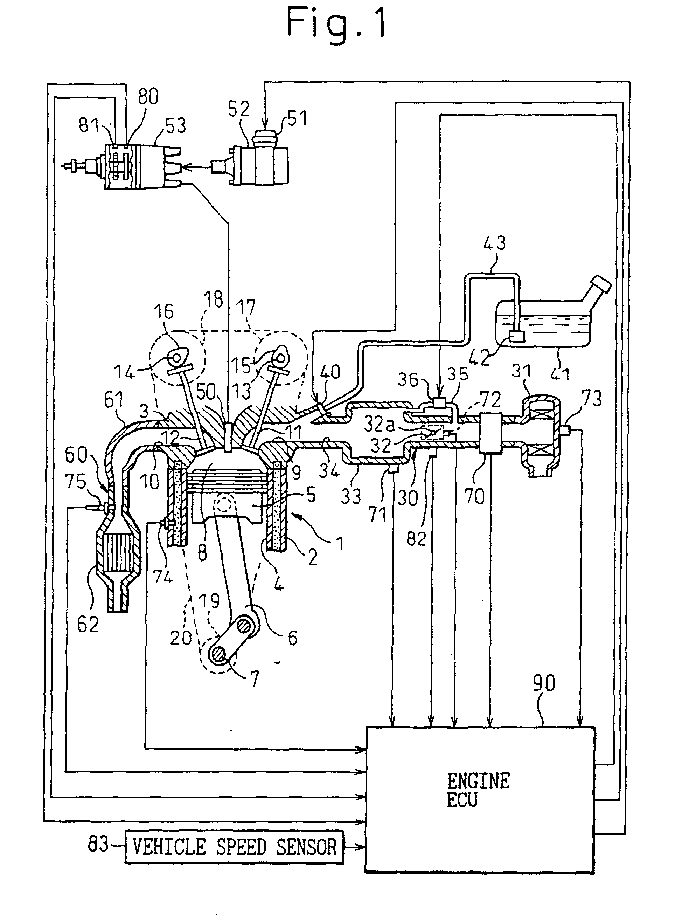

Figure 1 is a schematic diagram showing the general construction of an electronically controlled internal combustion engine equipped with a fuel cut control apparatus according to one embodiment of the present invention. The engine 1 is an in-line four-cylinder, four-stroke/cycle, reciprocating internal combustion gasoline engine mounted in a vehicle. The engine 1 comprises a cylinder block 2 and a cylinder head 3. In the cylinder block 2 are bored a plurality of vertically extending cylinders 4 that are ranged side by side in the direction perpendicular to the plane of the figure. A piston 5 is mounted movably in reciprocating fashion inside each cylinder 4. Each piston 5 is connected to a common crankshaft 7 by means of a connecting rod 6. The reciprocating motion of the piston 5 is converted to the rotational motion of the crankshaft 7 by means of the connecting rod 6.

Between the cylinder block 2 and cylinder head 3 are formed combustion chambers 8 one each located above each piston 5. The cylinder head 3 contains an intake port 9 and exhaust port 10 for each combustion chamber 8 which communicates with both exterior sides of the cylinder head 3 through these ports 9 and 10. To open and close these ports 9 and 10, an intake valve 11 and an exhaust valve 12 are supported in the cylinder head 3 in such a manner as to be movable in a reciprocating fashion in substantially vertical directions. In the cylinder head 3, an intake camshaft 13 and an exhaust camshaft 14 are rotatably mounted above the respective valves 11 and 12. The camshafts 13 and 14 are fitted with cams 15 and 16 for driving the intake valve 11 and exhaust valve 12, respectively. Timing pulleys 17 and 18 provided at respective ends of the camshafts 13 and 14 are connected by means of a timing belt 20 to a timing pulley 19 provided at one end of the crankshaft 7.

More specifically, as the crankshaft 7 rotates causing the timing pulley 19 to rotate, the rotational motion is transmitted to the timing pulleys 17 and 18 by means of the timing belt 20. At this time, the timing pulleys 17 and 18 are caused to rotate at the rotational speed one half that of the timing pulley 19. When the intake camshaft 13 rotates with the rotation of the timing pulley 17, the intake valve 11 moves in reciprocating fashion by the action of the cam 15, to open and close the intake port 9. Likewise, when the exhaust camshaft 14 rotates with the rotation of the timing pulley 18, the exhaust valve 12 moves in reciprocating fashion by the action of the cam 16, to open and close the exhaust port 10. In this way, the camshafts 13 and 14 are driven for rotation by the rotation of the crankshaft 7, to open and close the intake valve 11 and exhaust valve 12 in a constant cycle of 720 degrees of crankshaft rotation.

An intake passage 30 provided with an air cleaner 31, throttle valve 32, surge tank 33, intake manifold 34, etc., is connected to the intake port 9. Air (fresh air) outside the engine 1 passes through the parts 31, 32, 33, and 34 of the intake passage 30 in the order named and is drawn toward the combustion chamber 8. The throttle valve 32 is rotatably mounted on a shaft 32a in the intake passage 30. The shaft 32a is connected via a wire or the like to an accelerator pedal (not shown) in the driver compartment, and is rotated in integral fashion with the throttle valve 32 when the driver depresses the accelerator pedal. At this time, the amount of air flowing through the intake passage 30 (the intake air amount) is determined according to the angular position of the throttle valve 32. The surge tank 33 is provided to smooth out intake air pulsation (pressure vibration). An idle speed control valve (ISCV) 36 for adjusting air flow rate during idle is installed in an idle adjust passage 35 that bypasses the throttle valve 32.

An injector 40 for injecting fuel into the intake port 9 is mounted in the intake manifold 34. Fuel stored in a fuel tank 41 is drawn by a fuel pump 42 and supplied to the injector 40 through a fuel pipe 43. The fuel injected from the injector 40 and the air flowing through the intake passage 30 are mixed together, and the air/fuel mixture is drawn through the intake valve 11 into the combustion chamber 8 during the intake stroke and is compressed by the piston 5 during the compression stroke.

A spark plug 50 is mounted in the cylinder head 3 to ignite the mixture. To accomplish the ignition, an ignition signal is applied to an igniter 51, which controls the switching of the primary current supplied to an ignition coil 52, and the induced secondary current is supplied to the spark plug 50 by an ignition distributor 53. The ignition distributor 53 is a device for distributing the secondary current to the spark plug 50 on each cylinder in synchronism with the rotation of the crankshaft 7. The mixture drawn into the combustion chamber 8 is burned by being ignited by the spark plug 50 (expansion stroke). The resulting high-temperature, high-pressure burning gases force the piston 5 downward, causing the crankshaft 7 to rotate, and the engine 1 thus produces power.

The burned mixture as exhaust gas is introduced through the exhaust valve 12 into the exhaust port 10 during the exhaust stroke. An exhaust passage 60 provided with an exhaust manifold 61, catalytic converter 62, etc. is connected to the exhaust port 10. The catalytic converter 62 contains a three-way catalyst which simultaneously promotes the oxidation of unburned hydrocarbons (HC) and carbon monoxide (CO) and the reduction of nitrogen oxides ($NO_x$) formed by unburned oxygen reacting with nitrogen in the air. The exhaust gas thus purified in the catalytic converter 62 is discharged into the atmosphere.

As shown in Figure 1, the engine 1 is equipped with various kinds of sensors. A coolant temperature sensor 74 for detecting coolant temperature (THW) of the engine 1 is mounted in the cylinder block 2. An air flow meter 70 for detecting the amount of intake air (flow rate QA) is mounted in the intake passage 30. In the intake passage 30, an intake air temperature sensor 73 for detecting intake air temperature (THA) is mounted near the air cleaner 31. Near the throttle valve 32 in the intake passage 30 is mounted a throttle angle sensor 72 for detecting the angular position of the shaft 32a (throttle angle TA). There is also provided an idle switch 82 which, when the throttle valve 32 reaches its fully closed position, is turned on and sets its output, a throttle full-close signal, active. An intake air pressure sensor 71 for detecting the internal pressure (intake air pressure PM) of the surge tank 33 is mounted in the surge tank 33. An $O_2$ sensor 75 for detecting residual oxygen concentration in the exhaust gas is mounted partway through the exhaust passage 60.

The distributor 53 contains two rotors which rotate in synchronism with the rotation of the crankshaft 7. The distributor 53 is provided with a crankshaft reference position sensor 80 which, based on the rotation of one rotor, generates a reference position detection pulse for every 720° CA rotation measured in degrees of crankshaft angle (CA) to detect the reference position of the crankshaft 7, and a crankshaft angle sensor 81 which, based on the rotation of the other rotor, generates a position detection pulse for every 30° CA to detect the rotational speed of the crankshaft 7 (engine rpm NE). The vehicle is also mounted with a vehicle speed sensor 83 which produces output pulses representing the actual vehicle speed.

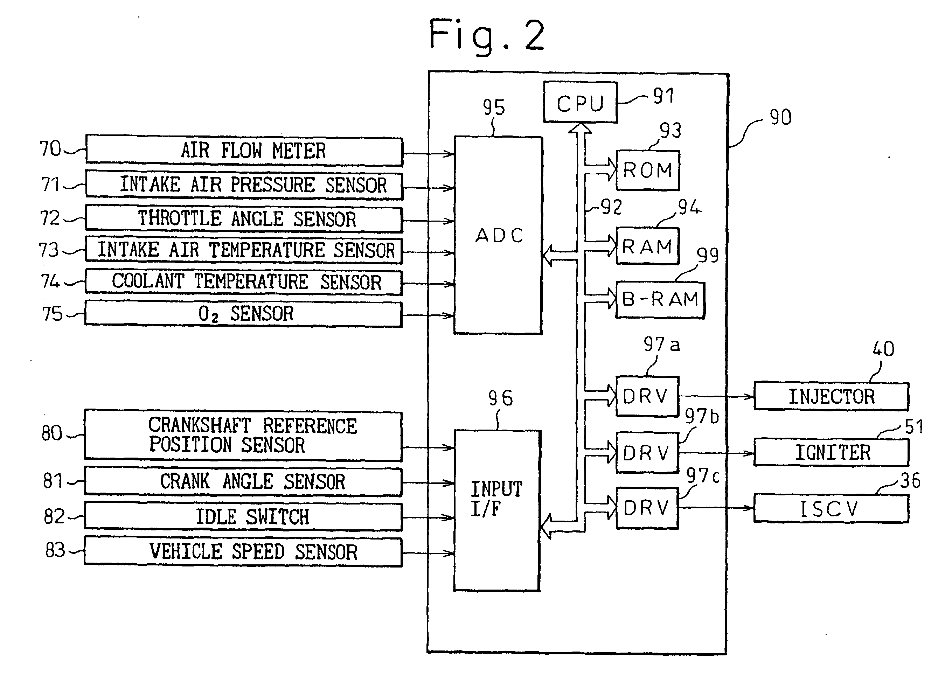

The engine electronic control unit (engine ECU) 90 shown in Figure 1 is a microcomputer system that performs fuel injection control, ignition timing control, idle speed control, etc. The hardware configuration is shown in the block diagram of Figure 2. Signals from the various sensors and switches are input via an A/D conversion circuit (ADC) 95 or via an input interface circuit 96 to a central processing unit (CPU) 91 which, in accordance with programs and various maps stored in a read-only memory (ROM) 93, performs arithmetic operations using the input signals, and based on the results of the operations, outputs control signals for the various actuators via respective drive control circuits 97a-97d. A random-access memory (RAM) 94 is used to temporarily store data during the arithmetic operation and control processes. A backup RAM 99 is supplied with power from a battery (not shown) directly connected to it, and is used to store data (such as various learning values) that should be retained when the ignition switch is off. These constituent elements of the ECU are interconnected by a system bus 92 consisting of an address bus, a data bus, and a control bus.

Ignition timing control is performed by sending an ignition signal to the igniter 51 via the drive control circuit 97b after determining optimum ignition timing by comprehensively judging the engine condition based on the engine rpm obtained from the crankshaft angle sensor 81 and on signals from other sensors.

In idle speed control, an idle state is detected based on the throttle full-close signal from the idle switch 82 and the vehicle speed signal from the vehicle speed sensor 83, and the actual engine rpm is compared with the target rpm determined by such factors as the engine coolant temperature from the coolant temperature sensor 74; then, based on the resulting error, the control amount necessary to achieve the target rpm is determined, and the amount of air is adjusted by controlling the ISCV 36 via the drive control circuit 97c, thereby maintaining optimum idle speed.

In this idle speed control, learning control is performed, in addition to the above feedback control, to make it easier to maintain the idle speed at a constant value. More specifically, since the ISCV opening necessary to maintain the idle speed constant varies due to variations among individual parts and also changes over time, an ISCV opening learning value DG for absorbing such variations and changes is obtained and updated through learning during the process of feedback control.

Basically, the fuel injection control involves computing the fuel injection amount, that is, the injection time of the injector 40, that achieves the desired target air/fuel ratio on the basis of the intake air amount per engine revolution, and controlling the injector 40 via the drive control circuit 97a so that fuel is injected at the time instant that the prescribed crankshaft angle is reached. Here, the intake air amount per engine revolution is either computed from the intake air flow rate measured by the air flow meter 70 and the engine rpm obtained from the crankshaft angle sensor 81, or estimated from the engine rpm and the intake manifold pressure obtained from the intake air pressure sensor 71. In the above fuel injection amount computation, corrections are applied, such as basic corrections based on signals from the throttle angle sensor 72, intake air temperature sensor 73, coolant temperature sensor 74, etc., an air/fuel ratio feedback correction based on a signal from the $O_2$ sensor 75, and an air/fuel ratio learning correction, to bring the median of the feedback correction value to stoichiometry.

The fuel injection control also includes fuel cut control during deceleration. As previously described, when fuel cut is performed while a catalyst temperature (catalyst bed temperature) is high, a lean exhaust gas resulting from the fuel cut flows into the catalyst; it is known that the catalyst deteriorates in such a high-temperature, lean atmosphere. Here, we consider the case where fuel cut is prohibited in order to prevent such catalyst deterioration. In a driving condition where fuel cut is performed, the amount of intake air is set to a relatively large value in order to reduce the oil consumption due to intake manifold vacuum, but the combustion limit is not considered here. As a result, when the fuel cut is prohibited, there occurs a possibility that fuel may be injected with the intake air amount per stroke dropping below the combustion limit; if this happens, misfire occurs. The present invention aims at avoiding the occurrence of such misfire by securing an intake air amount just sufficient to prevent the occurrence of misfire when fuel cut during deceleration is prohibited in order to prevent catalyst deterioration due to exposure to a high-temperature, lean atmosphere. Specific processing for accomplishing this will be described in detail below.

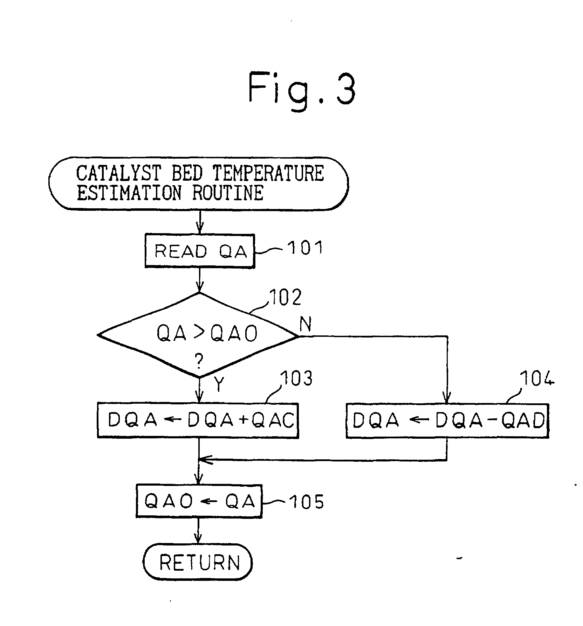

Figure 3 is a flowchart illustrating a processing sequence for a catalyst bed temperature estimation routine which is executed by the CPU 91 to estimate the catalyst bed temperature. This routine is executed at predetermined intervals of time. The catalyst bed temperature can be estimated from the intake air flow rate QA. However, the catalyst bed temperature changes slowly with changes in the intake air flow rate after a prescribed time delay. Accordingly, the catalyst bed temperature here is represented by a delayed intake air flow rate DQA (delayed QA) in which changes in the intake air flow rate QA are reflected with the prescribed time delay.

First, in step 101, the present intake air flow rate QA is detected based on the output of the air flow meter 70. Next, in step 102, a decision is made as to whether or not the present intake air flow rate QA is greater than the previously calculated intake air flow rate QAO. If QA is greater than QAO, the process proceeds to step 103 where the delayed intake air flow rate DQA is increased by a prescribed amount QAC; otherwise, the process proceeds to step 104 where the delayed intake air flow rate DQA is reduced by a prescribed amount QAD. Finally, in step 105, the QA calculated in the present cycle is stored as QAO for the next cycle. The delayed intake air flow rate DQA thus obtained is one that follows the intake air flow rate QA at a slow speed, and can be used as a quantity that represents the catalyst bed temperature. As an alternative method, the catalyst bed temperature may be directly detected using a temperature sensor mounted on the catalyst.

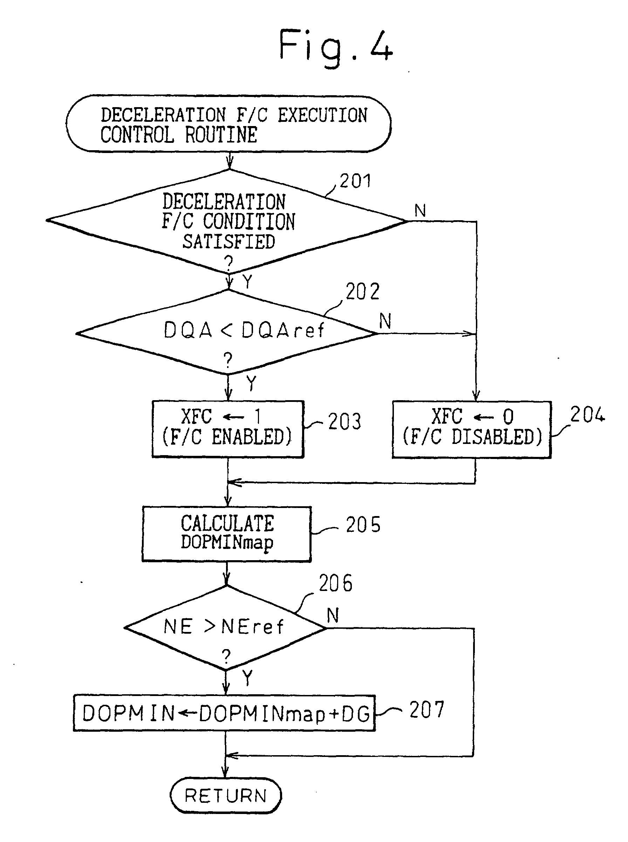

Figure 4 is a flowchart illustrating a processing sequence for a deceleration fuel cut execution control routine which is executed by the CPU 91. This deceleration fuel cut execution control routine is given the highest priority in the fuel injection control process and is processed in preference to other control routines. This routine determines whether deceleration fuel cut should be effected at the next fuel injection timing. The purpose of this routine is to prohibit the execution of deceleration fuel cut when the catalyst bed temperature is high. This routine, at the same time, performs control to provide the minimum necessary intake air amount for combustion by using the ISCV 36 and thereby prevent the occurrence of misfire regardless of the time when the execution of deceleration fuel cut is prohibited.

First, a decision is made as to whether a deceleration fuel cut condition, i.e., an idle-on F/C condition or a downhill F/C condition, is satisfied (step 201). Here the idle-on F/C condition refers to the condition in which the idle switch 82 is on, that is, the throttle valve 32 is in its fully closed position, and at the same time, the engine rpm NE is above a preset value. The downhill F/C condition is a condition in which misfire is likely to occur with the intake air amount or fuel injection quantity tending to drop below the combustion limit. If the answer to the decision in step 201 is NO, that is, if the deceleration F/C condition is not satisfied, flag XFC is set to 0 and the execution of F/C is disabled (step 204).

On the other hand, if the answer to the decision in step 201 is YES, that is, if the deceleration F/C condition is satisfied, then a decision is made as to whether the catalyst bed temperature equivalent quantity DQA is smaller than a predetermined decision reference value DQAref (step 202). The decision reference value DQAref corresponds, for example, to a catalyst bed temperature of 800°C. When DQA < DQAref, that is, when the catalyst temperature is low, there is no problem of catalyst deterioration due to exposure to a high-temperature, lean atmosphere, so that the flag XFC is set to 1 and the execution of F/C is enabled (step 203). On the other hand, when DQA ≥ DQAref, that is, when the catalyst bed temperature is high, the condition can cause catalyst deterioration and the execution of F/C must be prohibited; therefore, the flag XFC is set to 0 and the execution of F/C is disabled (step 204). The state of the flag XFC that is set or unset in step 203 or 204 is examined in the fuel injection control separately performed, and when XFC = 1, fuel injection is stopped.

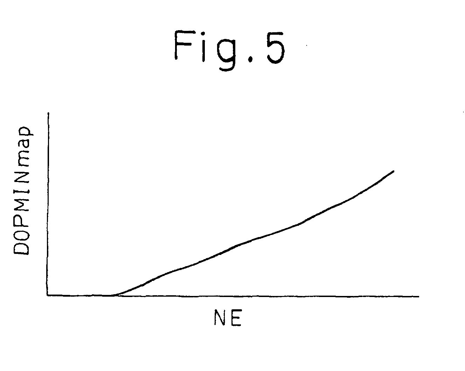

In step 205 that follows step 203 or 204, by referring to a map such as shown in Figure 5, DOPMINmap, the opening of the ISCV 36 necessary to provide an intake air amount close to the combustion limit and yet sufficient to prevent misfire, is obtained based on the present engine rpm NE. Since the amount of air per engine stroke at the combustion limit is constant, the intake air flow rate representing the amount per unit time must be increased with increasing engine rpm NE, and therefore, the ISCV opening DOPMINmap must be increased. The above map is prestored in the ROM 93.

Next, in step 206, a decision is made as to whether or not the engine rpm NE is greater than a predetermined decision reference value NEref. The decision reference value NEref is, for example, 1000 rpm. If NE ≤ NEref, the routine is terminated. On the other hand, if NE > NEref, the following calculation is performed (step 207) to calculate a lower limit guard value DOPMIN for the ISCV opening, based on the DOPMINmap and the previously mentioned ISCV opening learning value DG obtained through learning in the idle speed control to absorb variations among individual parts and changes over time.

$$DOPMIN \leftarrow DOPMINmap + DG$$

Then, in a process performed separately, the ISCV 36 is controlled so that the ISCV opening DOP does not drop below DOPMIN.

Since the minimum necessary intake air amount is secured for combustion at all times by using the ISCV 36, as described above, misfire does not occur even if fuel injection is effected by prohibiting F/C in order to prevent catalyst deterioration in step 202.

In the present embodiment, the idle speed control valve (ISCV) is used as the intake air amount adjusting means, but in the case of an engine equipped with an electronic throttle that performs the opening and closing of the throttle valve by means of an actuator, or with an air valve that opens for increased idle speed when the air conditioner or the like turns on, the same control can be accomplished by using such means.

As previously described, when deceleration fuel cut is prohibited according to the catalyst temperature and fuel injection is allowed to continue, there arises the problem of an unnatural vehicle deceleration feeling. The present invention addresses this problem by not allowing the prohibition of fuel cut associated with the prevention of catalyst deterioration when the vehicle is in a driving condition that impairs the deceleration feeling and give the driver an unnatural feeling, that is, in a driving condition under which the decelerating force of the engine (engine braking) makes an appreciable contribution to vehicle deceleration. For example, when the vehicle speed is relatively slow, aerodynamic drag due to wind is small and, in such a driving condition, the decelerating force of the engine (engine braking) is expected to make an appreciable contribution vehicle deceleration. In a second embodiment of the present invention, not only the occurrence of misfire is prevented, as in the first embodiment, but also the impairment of the deceleration feeling is prevented by not allowing the prohibition of fuel cut associated with the prevention of catalyst deterioration when the vehicle speed is below a predetermined value. Specific processing for accomplishing this will be described in detail below.

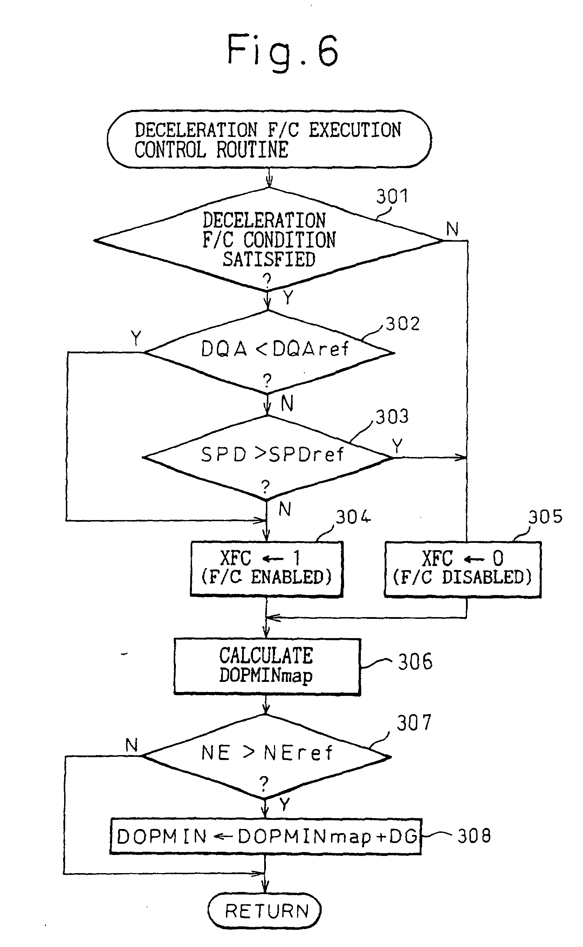

Figure 6 is a flowchart illustrating a processing sequence for a deceleration fuel cut execution control routine (second embodiment) which is executed by the CPU 91. In this routine, a process in which the impairment of the deceleration feeling is prevented by aborting the prohibition of fuel cut when the vehicle speed is below a predetermined value, is added to the process of the first embodiment.

First, a decision is made as to whether a deceleration fuel cut condition, i.e., an idle-on F/C condition or a downhill F/C condition, is satisfied (step 301). Here the idle-on F/C condition refers to the condition in which the idle switch 82 is on, that is, the throttle valve 32 is in its fully closed position, and at the same time, the engine rpm NE is above a preset value. The downhill F/C condition is a condition in which misfire is likely to occur with the intake air amount or fuel injection quantity tending to drop below the combustion limit. If the answer to the decision in step 301 is NO, that is, if the deceleration F/C condition is not satisfied, flag XFC is set to 0 and the execution of F/C is disabled (step 305).

On the other hand, if the answer to the decision in step 301 is YES, that is, if the deceleration F/C condition is satisfied, then a decision is made as to whether the catalyst bed temperature equivalent quantity DQA is smaller than a predetermined decision reference value DQAref (step 302). The decision reference value DQAref corresponds, for example, to a catalyst bed temperature of 800°C. When DQA < DQAref, that is, when the catalyst temperature is low, there is no problem of catalyst deterioration due to exposure to a high-temperature, lean atmosphere, so that the flag XFC is set to 1 and the execution of F/C is enabled (step 304).

However, when DQA ≥ DQAref, that is, when the catalyst bed temperature is high, the condition can cause catalyst deterioration, and according to the prior art, this condition dictates that the execution of F/C be prohibited. In the present embodiment, however, a decision is first made as to whether or not the vehicle speed SPD detected by the vehicle speed sensor 83 is greater than a predetermined decision reference value SPDref (step 303). When SPD > SPDref, that is, when the vehicle speed is high, a natural deceleration feeling can be obtained because of a large aerodynamic drag; therefore, the flag XFC is set to 0 and the execution of F/C is disabled to prohibit F/C from the viewpoint of catalyst deterioration prevention (step 305). However, when SPD ≤ SPDref, that is, when the vehicle speed is slow, deceleration due to aerodynamic drag cannot be obtained, so that the flag XFC is set to 1 and the execution of F/C is enabled so that the prohibition of F/C to be effected for the prevention of catalyst deterioration is aborted in order to secure the deceleration feeling (step 304). The state of the flag XFC that is set or unset in step 304 or 305 is examined in the fuel injection control separately performed, and when XFC = 1, fuel injection is stopped.

In step 306 that follows step 304 or 305, by referring to the map such as shown in Figure 5, DOPMINmap, the opening of the ISCV 36 necessary to provide an intake air amount close to the combustion limit and yet sufficient to prevent misfire, is obtained based on the present engine rpm NE.

Next, in step 307, a decision is made as to whether or not the engine rpm NE is greater than a predetermined decision reference value NEref. The decision reference value NEref is, for example, 1000 rpm. If NE ≤ NEref, the routine is terminated. On the other hand, if NE > NEref, the following calculation is performed (step 308) to calculate a lower limit guard value DOPMIN for the ISCV opening, based on the DOPMINmap and the previously mentioned ISCV opening learning value DG obtained through learning in the idle speed control to absorb variations among individual parts and changes over time.

$$DOPMIN \leftarrow DOPMINmap + DG$$

Then, in a process performed separately, the ISCV 36 is controlled so that the ISCV opening DOP does not drop below DOPMIN.

Next, a third embodiment of the present invention will be described. When a low gear is selected in the transmission connected to the engine, this condition also can be said to be the condition under which the decelerating force of the engine (engine braking) makes an appreciable contribution to vehicle deceleration. In the third embodiment, when a gear position lower than a prescribed transmission gear (third gear in this example) is selected in the transmission connected to the engine, the prohibition of fuel cut to be effected for the prevention of catalyst deterioration is aborted in order to prevent the impairment of the deceleration feeling.

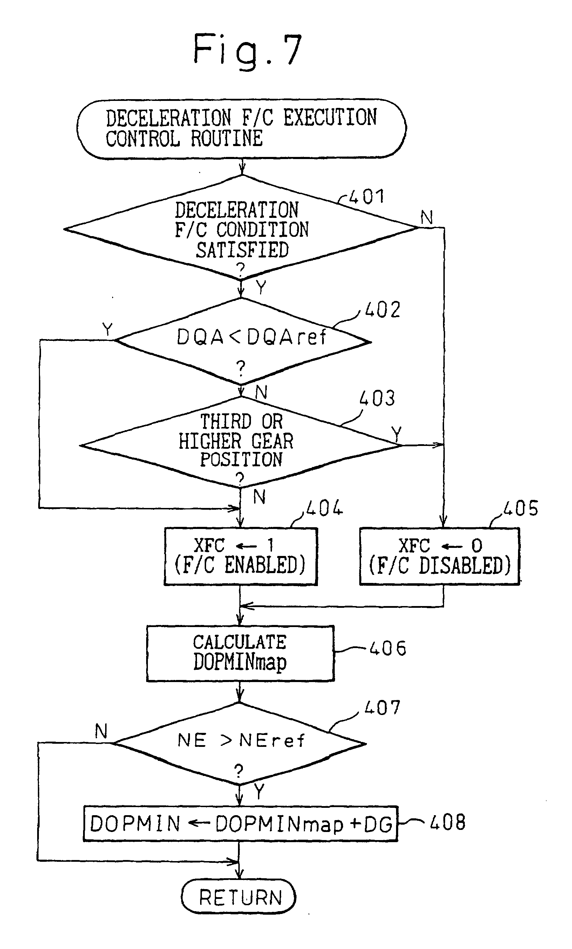

Figure 7 is a flowchart illustrating a processing sequence for a deceleration fuel cut execution control routine according to the third embodiment. Steps 401, 402, and 404 to 408 in this routine are the same as steps 301, 302, and 304 to 308 in the second embodiment, the only difference between the second and third embodiments being in the processing in steps 303 and 403. More specifically, in step 403 a decision is made as to whether the transmission gear position is, for example, in third or higher gear. If the gear position is in third or higher gear, it is decided that an unnatural deceleration feeling will not occur, and the F/C prohibition control is performed for the prevention of catalyst deterioration (step 405). On the other hand, if the gear position is lower than third gear, the F/C prohibition control to be effected for the prevention of catalyst deterioration is aborted in order to secure the deceleration feeling (step 404). In this embodiment, the third gear has been chosen as the reference gear position, but the reference gear position is not restricted to the third gear. Furthermore, in a vehicle equipped with a continuously variable transmission, for example, step 403 may be modified to determine whether the present gear ratio of the transmission is higher than a gear ratio that affects the deceleration feeling.

Next, a fourth embodiment of the present invention will be described. When the transmission connected to the engine is in the neutral position, it can be said that the driving condition is such that the driver is expecting the engine speed to drop soon. In the fourth embodiment, when the transmission connected to the engine is in the neutral position, the prohibition of fuel cut to be effected for the prevention of catalyst deterioration is aborted in order to prevent the driver from being subjected to an unnatural feeling.

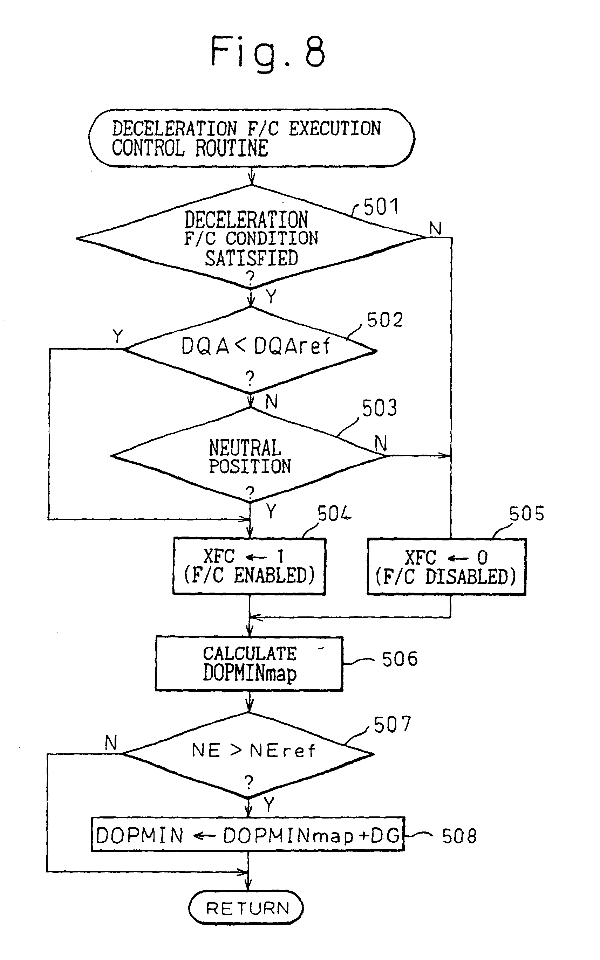

Figure 8 is a flowchart illustrating a deceleration fuel cut execution control routine according to the fourth embodiment. Steps 501, 502, and 504 to 508 are the same as steps 301, 302, and 304 to 308 in the second embodiment, the only difference between the second and fourth embodiments being in the processing in steps 303 and 503. More specifically, in step 503 a decision is made as to whether the transmission shift position is in neutral or not. If the shift position is not in neutral, the F/C prohibition control is performed for the prevention of catalyst deterioration (step 505). However, if the shift position is in neutral, the F/C prohibition control to be effected for the prevention of catalyst deterioration is aborted in order to prevent the generation of an unnatural feeling (step 504).

As described above, according to the present invention, when prohibiting deceleration fuel cut to prevent catalyst deterioration due to exposure to a hightemperature, lean atmosphere, the provision of means for adjusting the intake air amount so as to secure a minimum required intake air amount for combustion serves to eliminate the possibility of misfire. Furthermore, if provisions are made to supply a minimum required intake air amount for combustion at all times regardless of whether the fuel cut is executed or prohibited, misfire due to a drop in intake air amount cannot occur. This serves not only to reduce exhaust emissions but also to eliminate deceleration shocks and improve drivability.

Also, according to the present invention, in a driving condition that impairs the deceleration feeling and gives the driver an unnatural feeling, that is, in a driving condition under which the decelerating force of the engine makes an appreciable contribution to vehicle deceleration, the prohibition of fuel cut to be effected for the prevention of catalyst deterioration in a hightemperature, lean atmosphere is aborted and fuel cut is executed; as a result, the decelerating force of the engine increases and the impairment of the vehicle deceleration feeling is prevented.

The invention may be embodied in other specific forms without departing from essential characteristics thereof. The present embodiment is therefore to be considered in all respects as illustrative and not restrictive, the scope of the invention being indicated by the appended claims and all changes which come within the claims are therefore embraced therein.

**Claims**

1. A fuel cut control apparatus for an internal combustion engine (1), comprising fuel cut executing means (40, 90) for executing fuel cut during deceleration of said internal combustion engine (1), and fuel cut prohibiting means (90) for prohibiting the execution of fuel cut by said fuel cut executing means when the temperature of a catalyst (62) installed in an exhaust system (60) of said internal combustion engine (1) is high, said control apparatus **characterized by**

   the provision of intake air amount adjusting means (32, 32a, 36) for adjusting, when the fuel cut is prohibited by said fuel cut prohibiting means, the amount of intake air to said internal combustion engine in accordance with the rotational speed of said internal combustion engine so that the amount of intake air is brought close to a limit where misfire does not occur.

2. A fuel cut control apparatus according to claim 1, said control apparatus **characterized by** the provision of judging means (90) for judging whether or not a vehicle is in a driving condition under which the decelerating force of said internal combustion engine (1) makes an appreciable contribution to vehicle deceleration and aborting means for aborting the prohibition of fuel cut by said fuel cut prohibiting means when it is judged by said judging means that said vehicle is in said driving condition.

3. A fuel cut control apparatus for an internal combustion engine (1) according to claim 2, wherein said judging means (90) judges that said vehicle is in said driving condition when vehicle speed is below a predetermined value.

4. A fuel cut control apparatus for an internal combustion engine (1) according to claim 2, wherein said judging means judges that said vehicle is in said driving condition when a gear lower than a prescribed gear is selected in a transmission connected to said internal combustion engine.

5. A fuel cut control apparatus according to claim 1, said control apparatus **characterized by** the provision of judging means for judging whether or not a transmission connected to said internal combustion engine is in a neutral state and aborting means for aborting the prohibition of fuel cut by said fuel cut prohibiting means when it is judged by said judging means that said transmission is in the neutral state.

6. A fuel cut control apparatus for an internal combustion engine (1) according to claim 1, wherein said intake air amount adjusting means (36) is implemented by an idle speed control apparatus which consists of a bypass passage for bypassing a throttle valve provided for an intake passage of the engine and a bypass valve for controlling the opening and closing of the bypass passage.

**7.** A fuel cut control apparatus for an internal combustion engine (1) according to claim 1, wherein said intake air amount adjusting means (32, 32a) is implemented by an electronic throttle which performs, by means of actuator, the opening and closing of a throttle valve provided for an intake passage of the engine.

**8.** A fuel cut control apparatus for an internal combustion engine (1) according to claim 1, wherein said intake air amount adjusting means (32, 32a, 36) is implemented by an air valve provided for the engine.

**9.** A fuel cut control apparatus for an internal combustion engine (1) according to claim 1, wherein said temperature of the catalyst (62) is estimated from the delayed intake air flow rate (DQA).

**Patentansprüche**

**1.** Eine Schubabschaltungssteuervorrichtung für eine Brennkraftmaschine (1), die aufweist: Eine Schubabschaltungsdurchführungseinrichtung (40, 90), um eine Schubabschaltung während des Abbremsens der Brennkraftmaschine (1) durchzuführen, und eine Schubabschaltungsverhinderungseinrichtung (90), um die Durchführung der Schubabschaltung durch die Schubabschaltungsdurchführungseinrichtung zu verhindern, wenn die Temperatur eines Katalysators (62), der in einem Abgassystem (60) der Brennkraftmaschine (1) eingebaut ist, hoch ist,

wobei die Steuereinrichtung **gekennzeichnet ist durch**

Vorsehen einer Einrichtung (32, 32a, 36) zum Anpassen einer Einlassluftmenge, um, wenn die Schubabschaltung von der Schubabschaltungsverhinderungseinrichtung verhindert wird, die Menge an Einlassluft für die Brennkraftmaschine so an die Drehzahl der Brennkraftmaschine anzupassen, dass die Einlassluftmenge nahe an einen Grenzwert gebracht wird, an dem keine Fehlzündung auftritt.

**2.** Eine Schubabschaltungssteuervorrichtung nach Anspruch 1, wobei die Steuervorrichtung **gekennzeichnet ist durch** das Vorsehen einer Beurteilungseinrichtung (90), um zu beurteilen, ob ein Fahrzeug in einem Fahrzustand ist, in dem die Bremskraft der Brennkraftmaschine (1) einen merkbaren Beitrag zur Fahrzeugverzögerung leistet, und eine Beendigungseinrichtung, um das Verhindern der Schubabschaltung **durch** die Schubabschaltungsverhinderungseinrichtung zu beenden, wenn von der Beurteilungseinrichtung festgestellt wird, dass sich das Fahrzeug in dem Fahrzustand befindet.

**3.** Schubabschaltungssteuervorrichtung für eine Brennkraftmaschine (1) nach Anspruch 2, wobei die Beurteilungseinrichtung (90) beurteilt, dass sich das Fahrzeug in dem Fahrzustand befindet, wenn die Fahrzeuggeschwindigkeit unter einem vorab bestimmten Wert liegt.

**4.** Schubabschaltungssteuervorrichtung für eine Brennkraftmaschine (1) nach Anspruch 2, wobei die Beurteilungseinrichtung (90) beurteilt, dass sich das Fahrzeug in dem Fahrzustand befindet, wenn ein Gang in einem Getriebe ausgewählt ist, das mit der Brennkraftmaschine verbunden ist, der niedriger als ein vorab bestimmter Gang ist.

**5.** Schubabschaltungssteuervorrichtung nach Anspruch 1,
wobei die Steuervorrichtung **gekennzeichnet ist durch** das Vorsehen einer Beurteilungseinrichtung, um zu beurteilen, ob ein mit der Brennkraftmaschine verbundenes Getriebe im Leerlauf ist oder nicht, und einer Beendigungseinrichtung, um das Verhindern der Schubabschaltung **durch** die Schubabschaltungsverhinderungseinrichtung zu beenden, wenn die Beurteilungseinrichtung beurteilt, dass das Getriebe im Leerlauf ist.

**6.** Schubabschaltungssteuervorrichtung für eine Brennkraftmaschine (1) nach Anspruch 1, wobei die Einrichtung (36) zum Anpassen einer Einlassluftmenge durch eine Leerlaufdrehzahlsteuervorrichtung verwirklicht ist, die aus einem Umgehungsdurchlass, um ein Drosselventil zu umgehen, das für einen Einlassdurchlass der Brennkraftmaschine vorgesehen ist, und einem Umgehungsventil, um das Öffnen und Schließen des Umgehungsdurchlasses zu steuern, besteht.

**7.** Schubabschaltungssteuervorrichtung für eine Brennkraftmaschine (1) nach Anspruch 1, wobei die Einrichtung (32, 32a) zum Anpassen einer Einlassluftmenge durch eine elektronische Drossel verwirklicht ist, die mittels eines Stellglieds das Öffnen und Schließen eines Drosselventils durchführt, das für einen Einlassdurchlass der Brennkraftmaschine vorgesehen ist.

**8.** Schubabschaltungssteuervorrichtung für eine Brennkraftmaschine (1) nach Anspruch 1, wobei die Einrichtung (32, 32a, 36) zum Anpassen einer Einlassluftmenge durch ein Luftventil verwirklicht ist, das für die Brennkraftmaschine vorgesehen ist.

**9.** Schubabschaltungssteuervorrichtung für eine Brennkraftmaschine (1) nach Anspruch 1, wobei die Temperatur des Katalysators (62) aus der verzögerten Einlassluftflussrate (DQA) abgeschätzt wird.

## Revendications

1. Appareil de commande de coupure d'injection de carburant pour un moteur à combustion interne (1), comprenant des moyens d'exécution de la coupure d'injection de carburant (40, 90) destinés à exécuter la coupure d'injection de carburant pendant la décélération dudit moteur à combustion interne (1), et des moyens d'interdiction de la coupure de l'injection de carburant (90) destinés à interdire l'exécution de la coupure d'injection de carburant par lesdits moyens d'exécution de la coupure d'injection de carburant lorsque la température du catalyseur (62) installé dans le système d'échappement (60) dudit moteur à combustion interne (1) est élevée, ledit appareil de commande étant **caractérisé par**
la fourniture de moyens de réglage de la quantité d'air d'admission (32, 32a, 36) pour régler, lorsque la coupure d'injection de carburant est interdite par lesdits moyens d'interdiction de coupure d'injection de carburant, la quantité d'air d'admission vers ledit moteur à combustion interne conformément à la vitesse de rotation dudit moteur à combustion interne de façon à ce que la quantité d'air d'admission soit amenée près d'une limite où un raté d'allumage ne peut pas se produire.

2. Appareil de commande de coupure d'injection de carburant selon la revendication 1, ledit appareil de commande étant **caractérisé par** la fourniture de moyens d'évaluation (90) destinés à évaluer si un véhicule est ou non dans un état de conduite dans lequel la force de décélération dudit moteur à combustion interne (1) contribue sensiblement à la décélération du véhicule et de moyens d'absorption destinés à interrompre l'interdiction de la coupure d'injection de carburant par lesdits moyens d'interdiction de coupure d'injection du carburant lorsque lesdits moyens d'évaluation calculent que ledit véhicule est dans ledit état de conduite.

3. Appareil de commande de coupure d'injection de carburant destinée à un moteur à combustion interne (1) selon la revendication 2, dans lequel ledit moyen d'évaluation (90) calcule que ledit véhicule est dans un état de conduite lorsque la vitesse du véhicule est en dessous d'une valeur prédéterminée.

4. Appareil de commande de coupure d'injection de carburant destiné à un moteur à combustion interne (1) selon la revendication 2, dans lequel le moyen d'évaluation calcule que ledit véhicule est dans ledit état de conduite lorsqu'un engrenage plus faible qu'un engrenage imposé est sélectionné dans une boîte de vitesse reliée audit moteur à combustion interne.

5. Appareil de commande de coupure d'injection de carburant selon la revendication 1, ledit appareil de commande étant **caractérisé par** la fourniture d'un moyen d'évaluation destiné à évaluer si une boîte de vitesse reliée audit moteur à combustion interne se trouve ou ne se trouve pas à l'état neutre et si un moyen d'interruption destiné à interrompre l'interdiction de coupure d'injection de carburant par ledit moyen d'interdiction de coupure d'injection de carburant lorsque ledit moyen d'évaluation calcule que ladite boîte de vitesse est à l'état neutre.

6. Appareil de commande de coupure d'injection de carburant destiné à un moteur à combustion interne (1) selon la revendication 1, dans lequel ledit moyen de réglage de la quantité d'air d'admission (36) est mis en oeuvre par un appareil de commande de ralenti qui consiste en un canal de déviation destiné à mettre en dérivation un papillon des gaz prévu pour un canal d'admission du moteur et un clapet de dérivation destiné à commander l'ouverture et la fermeture du canal de dérivation.

7. Appareil de commande de la coupure d'injection de carburant destiné à un moteur à combustion interne (1) selon la première revendication, dans lequel ledit moyen (32, 32a) de réglage de la quantité d'air d'admission est mis en oeuvre par un clapet électronique qui réalise, au moyen d'un actionneur, l'ouverture et la fermeture d'un papillon des gaz prévu pour le canal d'admission du moteur.

8. Appareil de commande de coupure d'injection du carburant destiné à un moteur à combustion interne (1) selon la première revendication, dans lequel ledit moyen (32, 32a, 36)de réglage de la quantité d'air d'admission est mis en oeuvre par un clapet d'aération prévu pour le moteur.

9. Appareil de commande de coupure d'injection du carburant destiné à un moteur à combustion interne (1) selon la première revendication, dans lequel ladite température du catalyseur (62) est estimée à partir du retard dans le débit d'air d'admission (DQA).

# Fig. 1

# Fig.2

| | |
|---|---|
| 70 — | AIR FLOW METER |
| 71 — | INTAKE AIR PRESSURE SENSOR |
| 72 — | THROTTLE ANGLE SENSOR |
| 73 — | INTAKE AIR TEMPERATURE SENSOR |
| 74 — | COOLANT TEMPERATURE SENSOR |
| 75 — | O₂ SENSOR |

95 — ADC

CPU — 91
93 — ROM
92 — 94 — RAM
99 — B-RAM
90

| | |
|---|---|
| 80 — | CRANKSHAFT REFERENCE POSITION SENSOR |
| 81 — | CRANK ANGLE SENSOR |
| 82 — | IDLE SWITCH |
| 83 — | VEHICLE SPEED SENSOR |

96 — INPUT I/F

97a — DRV → INJECTOR — 40
97b — DRV → IGNITER — 51
97c — DRV → ISCV — 36

EP 0 866 219 B1

# Fig.3

CATALYST BED TEMPERATURE
ESTIMATION ROUTINE

READ QA —101

QA>QAO
?
—102

N

Y —103

$DQA \leftarrow DQA+QAC$

$DQA \leftarrow DQA-QAD$ —104

$QAO \leftarrow QA$ —105

RETURN

# Fig.4

DECELERATION F/C EXECUTION CONTROL ROUTINE

201 — DECELERATION F/C CONDITION SATISFIED ? → N

↓ Y

202 — DQA < DQAref ? → N

↓ Y

XFC ← 1 (F/C ENABLED) — 203

XFC ← 0 (F/C DISABLED) — 204

CALCULATE DOPMINmap — 205

206 — NE > NEref ? → N

↓ Y

DOPMIN ← DOPMINmap + DG — 207

RETURN

# Fig.5

# Fig.6

```
    ┌──────────────────────────────┐
    │  DECELERATION F/C EXECUTION   │
    │     CONTROL ROUTINE           │
    └──────────────────────────────┘
                  │
                  ▼
           ╱╲  301
          ╱    ╲
         ╱ DECELERATION ╲      N
        ╱  F/C CONDITION  ╲──────────┐
         ╲  SATISFIED    ╱           │
          ╲    ?        ╱            │
           ╲          ╱              │
              │ Y                    │
              ▼                      │
       Y    ╱╲  302                  │
    ┌──────╱    ╲                    │
    │     ╱ DQA<DQAref ╲             │
    │      ╲         ╱               │
    │       ╲  ?    ╱                │
    │          │ N                   │
    │          ▼                     │
    │        ╱╲  303                 │
    │       ╱    ╲        Y          │
    │      ╱ SPD>SPDref ╲────────────┤
    │       ╲         ╱              │
    │        ╲  ?    ╱               │
    │           │ N                  │
    │           ▼   304              ▼  305
    │    ┌──────────────┐    ┌──────────────┐
    └───►│  XFC ← 1      │    │  XFC ← 0      │
         │ (F/C ENABLED) │    │(F/C DISABLED) │
         └──────────────┘    └──────────────┘
                  │                  │
                  ▼◄─────────────────┘
         ┌──────────────┐
         │  CALCULATE    │  306
         │  DOPMINmap    │
         └──────────────┘
                  │
                  ▼
          N     ╱╲  307
       ┌───────╱    ╲
       │      ╱ NE>NEref ╲
       │       ╲       ╱
       │        ╲  ?  ╱
       │           │ Y
       │           ▼
       │   ┌──────────────────────────┐
       │   │ DOPMIN ← DOPMINmap+DG     │  308
       │   └──────────────────────────┘
       │           │
       └──────────►▼
              ┌─────────┐
              │ RETURN  │
              └─────────┘
```

# Fig.7

DECELERATION F/C EXECUTION
CONTROL ROUTINE

DECELERATION
F/C CONDITION
SATISFIED
? — 401 — N

Y

DQA < DQAref
? — 402 — Y

N

THIRD OR
HIGHER GEAR
POSITION
? — 403 — Y

N

XFC ← 1
(F/C ENABLED) — 404

XFC ← 0
(F/C DISABLED) — 405

CALCULATE
DOPMINmap — 406

NE > NEref
? — 407 — N

Y

DOPMIN ← DOPMINmap + DG — 408

RETURN

17

# Fig. 8

```
( DECELERATION F/C EXECUTION
  CONTROL ROUTINE )
           │
           ▼
      ╱DECELERATION╲        501
     ╱ F/C CONDITION╲──N──────────┐
     ╲  SATISFIED   ╱             │
      ╲     ?      ╱              │
           │Y                     │
           ▼                      │
   Y  ╱DQA<DQAref╲  502          │
  ┌───╲    ?     ╱               │
  │    ╲        ╱                │
  │        │N                    │
  │        ▼                     │
  │   ╱ NEUTRAL ╲  503           │
  │  ╱ POSITION  ╲──N────────────┼──────┐
  │  ╲           ╱               │      │
  │   ╲    ?    ╱                │      │
  │        │Y      504           │  505 │
  └────────▼──────┐         ┌────▼──────┐
      │ XFC ← 1   │         │ XFC ← 0   │
      │(F/C ENABLED)│       │(F/C DISABLED)│
      └─────┬──────┘        └─────┬──────┘
            │◄────────────────────┘
            ▼
      ┌──────────────┐
      │  CALCULATE   │  506
      │  DOPMINmap   │
      └──────┬───────┘
             ▼
    N  ╱ NE>NEref ╲  507
  ┌───╲    ?     ╱
  │    ╲        ╱
  │        │Y
  │        ▼
  │ ┌─────────────────────────┐
  │ │DOPMIN ← DOPMINmap+DG│ 508
  │ └─────────┬───────────┘
  └───────────┤
              ▼
          ( RETURN )
```